(19) **Europäisches Patentamt**
European Patent Office
Office européen des brevets

(11) **EP 2 146 426 B1**

(12) **EUROPÄISCHE PATENTSCHRIFT**

(45) Veröffentlichungstag und Bekanntmachung des Hinweises auf die Patenterteilung:
**27.06.2012 Patentblatt 2012/26**

(51) Int Cl.:
*H02P 21/00* (2006.01)    *H02P 23/06* (2006.01)
*H02P 25/02* (2006.01)    *H02P 29/02* (2006.01)
*H02P 21/14* (2006.01)

(21) Anmeldenummer: **08012848.1**

(22) Anmeldetag: **16.07.2008**

(54) **Verfahren zum Betrieb einer Antriebseinrichtung und Antriebseinrichtung zur Ausführung des Verfahrens**

Method for operating a drive device and drive device for implementing the method

Procédé de fonctionnement d'un dispositif d'entraînement et dispositif d'entraînement destiné à l'exécution du procédé

(84) Benannte Vertragsstaaten:
**DE FR GB**

(43) Veröffentlichungstag der Anmeldung:
**20.01.2010 Patentblatt 2010/03**

(73) Patentinhaber: **Siemens Aktiengesellschaft**
**80333 München (DE)**

(72) Erfinder:
• **Quaschner, Bernd**
**91091 Grossenseebach (DE)**

• **Schwesig, Günter**
**91054 Erlangen (DE)**
• **Hahn, Ulrich**
**91413 Neustadt/A. (DE)**

(56) Entgegenhaltungen:
JP-A- 2005 297 749    US-A1- 2003 020 431
US-A1- 2008 035 411

**Beschreibung**

Die Erfindung betrifft ein Verfahren zum Betrieb einer Antriebseinrichtung gemäß dem Oberbegriff des Anspruchs 1. Sie betrifft weiterhin eine Vorrichtung zur Durchführung des Verfahrens.

Derartige Verfahren sind allgemein bekannt. Dabei wird bei Auftreten eines Betriebsfehlers die Antriebseinrichtung bestmöglich stillgesetzt. Am schnellsten ist eine Stillsetzung mit einem generatorischen Bremsvorgang. Dieser ist jedoch bei bestimmten Fehlern nicht möglich, so dass in solchen Fällen ein "Sicherer Halt" durchgeführt wird. Dabei wird die Energiezufuhr abgetrennt und der Antrieb kommt entsprechend der noch gespeicherten kinetischen Energie und der vorhandenen Reibung zum Stillstand. Die Antriebseinrichtungen werden meist strom-, drehzahl- und lageabhängig geregelt, z.B. über ein Gebersystem. Eine zusätzliche Auswertung der Gebersignale, beispielsweise über eine redundante Geschwindigkeits- oder Drehzahlerfassung, wird bei einer sicherheitsgerichteten Ausführung der Antriebstechnik, im folgenden auch als "sichere Technik" bezeichnet, durchgeführt. Diese wird in der Industrie, z.B. bei Produktionsmaschinen oder Werkzeugmaschinen, zum Schutz von Mensch und Maschine eingesetzt. Der generatorische Bremsvorgang erfolgt im Allgemeinen nicht in sicherer Technik, da dies bei einem Betrieb mit Gebersystem nur mit erheblichem Soft- und Hardwareaufwand realisierbar ist. Beim Bremsvorgang wird daher z.B. ein Gradient einer Drehzahl oder Geschwindigkeit der Antriebseinrichtung in sicherer Technik beobachtet.

Aus der US 2008/0035411 A1 ist eine elektrische Servolenkung zum Betrieb eines elektrischen Motors in einem Fahrzeug beschrieben, bei dem ein Bremsvorgang durch Abschaltung einer Weiterleitung von Ansteuerungssignalen an einen Motor erfolgt. Der Motor wird durch Trennung der Energiezufuhr stillgesetzt. Eine Beobachtung des Bremsvorgangs erfolgt nicht.

Aus der JP 2005 297749 A geht ein Bremsenkontrollsystem für ein batteriebetriebenes Golffahrzeug hervor, bei dem, wenn ein Fehler an einer Trommelbremse erkannt wird, eine Geschwindigkeit über eine regenerative Bremse auf einen bestimmten Wert reduziert wird und dann mit einer Kupplungsbremse ein Nothalt ausgeführt wird.

Nachteilig bei diesen bekannten Antriebsverfahren ist jedoch, dass bei Auftreten eines Fehlers im Gebersystem, z.B. durch einen Defekt der Sensorik, Elektronik oder Mechanik, eine defekte Stromversorgung des Gebersystems, Kurzschlüsse oder Aderbrüche in den Geberleitungen usw., sowie bei zu hohen Drehzahlen oder Geschwindigkeiten, durch die die Grenzfrequenz der Elektronik des Gebersystems überschritten wird, kein generatorisches Bremsen mehr möglich ist. In diesem Fall muss sofort der langsamere "Sichere Halt" ausgeführt werden.

Der Erfindung liegt daher als Aufgabe zugrunde, ein Verfahren anzugeben, mit der die Antriebseinrichtung auch bei einem Fehler im Gebersystem optimal abgebremst und auch bei hohen Drehzahlen redundant beobachtet werden kann.

Diese Aufgabe wird erfindungsgemäß mit den Merkmalen des Anspruchs 1 gelöst. Dazu ist bei einem Verfahren zum Betrieb einer Antriebseinrichtung, bei der bei Auftreten eines Fehlers im Gebersystem eine Umschaltung vom Gebersystem auf ein von der Antriebseinrichtung umfasstes geberloses System erfolgt, vorgesehen, dass über das geberlose System ein Bremsvorgang generatorisch durchgeführt und redundant beobachtet wird, wobei zur redundanten Beobachtung der Antriebseinheit durch zeitliche Differentiation einerseits eines Sollwinkels und andererseits eines eine Frequenz eines am Stator gemessenen Stroms charakterisierenden Winkels ein erster und ein zweiter Frequenzwert ermittelt werden, die auf Überschreitung eines Grenzwerts überwacht werden, so dass bei Überschreiten mindestens eines der Grenzwerte eine Stillsetzung der Antriebseinrichtung erfolgen kann.

Zur Ausführung des Verfahrens ist eine Vorrichtung vorgesehen, mit der die genannte Aufgabe erfindungsgemäß durch die Merkmale des unabhängigen Vorrichtungsanspruchs gelöst wird.

Der Vorteil der Erfindung besteht darin, dass mit dem geberlosen System auch dann eine Drehzahl- oder Geschwindigkeitserfassung der Antriebseinrichtung erfolgt, wenn im Gebersystem ein Fehler auftritt. Dadurch kann der Bremsvorgang beobachtet werden und generatorisch erfolgen, wodurch die Antriebseinrichtung im Vergleich zum "sicheren Halt" schneller gebremst werden kann. Der Bremsvorgang wird durch die redundante Beobachtung in sicherer Technik durchgeführt, wodurch ein sicherer Betrieb der Antriebseinrichtung auch bei sehr hohen Drehzahlen oder Geschwindigkeiten möglich ist, wenn die Grenzfrequenz eines oder mehrerer Geber des Gebersystems überschritten wird. Durch die Beobachtung des Bremsvorgangs in sicherer Technik wird sicher erkannt, ob die Antriebseinrichtung tatsächlich abbremst. Erfolgt der erwartete Bremsvorgang nicht oder erfährt die Antriebsvorrichtung sogar eine Beschleunigung, kann der Bremsvorgang entsprechend abgebrochen werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Zur redundanten Beobachtung des generatorischen Bremsvorgangs werden einer Regelungseinheit in einer ersten vom geberlosen System umfassten Steuerungseinheit eine erste, zweite und dritte Komponente eines Dreiphasenwechselstroms, der von einem von der Antriebseinrichtung umfassten Motor erzeugt wird, zur Verarbeitung zugeführt, wobei ein Sollwert für eine Spannung eines von der Antriebseinrichtung umfassten Stators - Spannungssollwert - als Sollwinkel in Bezug auf eine Statorachse ausgegeben und an eine zweite vom geberlosen System umfasste Steuerungseinheit übergeben wird. Dadurch stehen der Spannungssollwert und der Sollwinkel in der zweiten Steuerungseinheit zur Erzeugung von Ansteuersignalen für den Antrieb zur Verfügung.

Weiter bevorzugt wird in der ersten Steuerungseinheit aus der ersten, zweiten und dritten Komponente des Dreiphasenwechselstroms ein eine Frequenz eines am Stator gemessenen Stroms charakterisierender Winkel in Bezug auf die Statorachse berechnet. Die aus dem Winkel ableitbare Frequenz des Statorstroms liefert Informationen bezüglich der aktuellen Geschwindigkeit der Antriebseinrichtung, so dass die Berechnung dieses Winkels als Ergänzung zum Sollwinkel die redundante Beobachtung ermöglicht.

Durch zeitliche Differentiation des Sollwinkels und/oder des Winkels in der ersten und zweiten Steuerungseinheit wird ein erster bzw. zweiter Frequenzwert des Stators berechnet, so dass eine Bestimmung einer Drehzahl der Antriebseinrichtung, insbesondere einer Motorwelle der Antriebseinrichtung, erfolgen kann.

Bevorzugt ist vorgesehen, dass der erste und/ oder zweite Frequenzwert einer von der zweiten bzw. ersten Steuerungseinheit umfassten zweiten bzw. ersten Überwachungseinheit zugeführt wird und in der zweiten bzw. ersten Überwachungseinheit überwacht wird, ob der erste bzw. zweite Frequenzwert unterhalb eines vorgegebenen ersten bzw. zweiten Grenzwerts verbleibt, wobei bei Überschreiten mindestens eines Grenzwerts eine Stillsetzung der Antriebseinrichtung erfolgt. Auf diese Weise kann ein Fehler bei der Überprüfung in der ersten bzw. zweiten Überwachungseinheit durch die Überprüfung in der zweiten bzw. ersten Überwachungseinheit ausgeglichen werden und der Betrieb der Antriebseinrichtung wird sicher überwacht.

Weiter bevorzugt erfolgt bei Abweichung des ersten Frequenzwerts von dem zweiten Frequenzwert um einen vorgegebenen Wert eine Stillsetzung der Antriebseinrichtung, wodurch sich eine zusätzliche Sicherheit für den Betrieb der Antriebseinrichtung ergibt.

Eine weitere Sicherheit ergibt sich bevorzugt dadurch, dass eine Summe der ersten, zweiten und dritten Komponente des Dreiphasenwechselstroms auf eine Nullsumme überprüft wird.

Außerdem ist bevorzugt vorgesehen, dass zur Stillsetzung der Antriebseinrichtung eine Weiterleitung von Ansteuersignalen, welche in einem von der zweiten Steuerungseinheit umfassten Transistor aus dem Spannungssollwert und dem Sollwinkel berechnet werden, an einen vom geberlosen System umfassten Wechselrichter gesperrt wird, so dass eine sichere, elektronische Abtrennung der Energiezufuhr der Antriebseinrichtung erfolgt.

Wenn ein Gradient der Drehzahl beobachtet wird, kann der Bremsvorgang sicher beobachtet werden, so dass beispielsweise bei einem positiven oder einen vorgegebenen Grenzwert überschreitenden Gradienten ein "sicherer Halt" durchgeführt werden kann.

Das weiter oben skizzierte und nachfolgend näher erläuterte Verfahren wird bevorzugt in Software und/ oder Firmware implementiert, so dass die Erfindung auch ein Computerprogramm mit durch einen Computer ausführbaren Programmcodeanweisungen bzw. Mikrocodeanweisungen betrifft. Insoweit betrifft die Erfindung dann auch ein Speichermedium mit einem durch einen Computer ausführbaren derartigen Computerprogramm sowie eine Antriebseinrichtung, auf der ein derartiges Computerprogramm geladen ist. Schließlich betrifft die Erfindung damit auch eine Antriebseinrichtung mit einer Verarbeitungseinheit nach Art eines Prozessors oder dergleichen als Mittel zur Umschaltung von einem Gebersystem auf ein geberloses System bei Auftreten eines Fehlers im Gebersystem und als Mittel zur Durchführung eines Bremsvorgangs als generatorischer Bremsvorgang, wobei auf der Verarbeitungseinheit ein Computerprogramm wie oben skizziert geladen ist und/oder wobei die Verarbeitungseinheit zur Ausführung eines derartigen Computerprogramms bestimmt und vorgesehen ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1   ein Schaltbild einer Antriebseinrichtung mit Dreipha- senwechselstromantrieb, Gebersystem und sicherheits- gerichteter Antriebstechnik,

FIG 2   einen Ausschnitt eines schematisch vereinfachten Auf- baus einer Antriebseinrichtung mit sicherheitsgerich- teter Antriebstechnik ohne Gebersystem,

FIG 3   ein Zeigerdiagramm einer Asynchronmaschine und

FIG 4    ein Zeigerdiagramm einer Synchronmaschine.

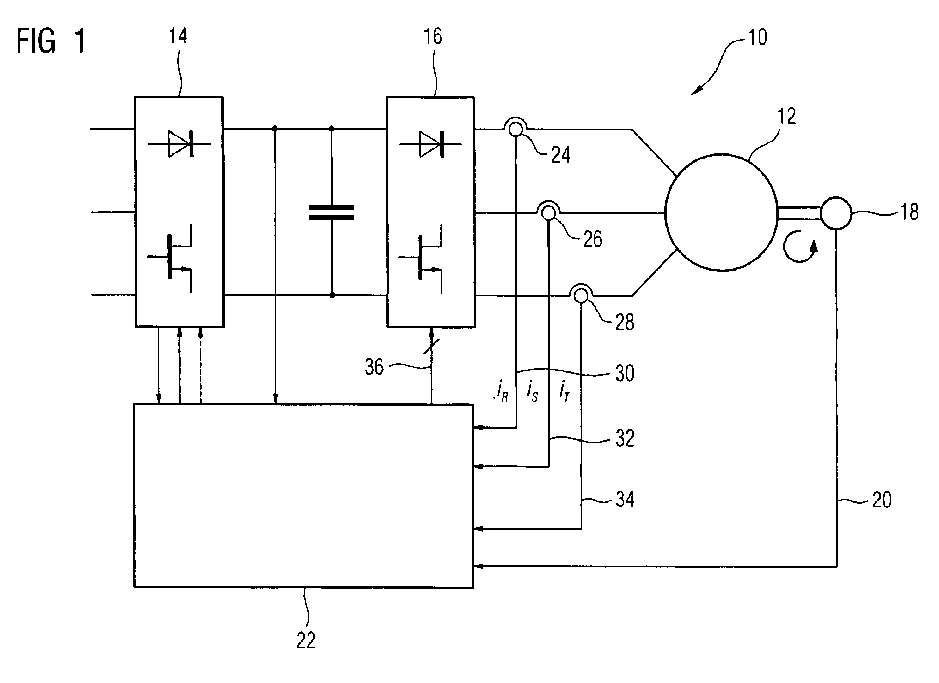

FIG 1 zeigt als Beispiel für eine Antriebseinrichtung eine Antriebseinrichtung 10 mit einem Motor 12, die über ein Dreiphasenwechselstromnetz betrieben wird. Der Motor 12 wird über einen Gleichrichter 14 und einen Wechselrichter 16 gespeist, welche als Umrichter z.B. zum Betrieb einer Werkzeugmaschine eingesetzt werden. Des Weiteren ist der Motor 12 mit einem Gebersystem 18 ausgestattet, welcher einer Lage- und Drehzahlerfassung sowie einer Stromregelung dient. Signale des Gebersystems 18 - Gebersignale 20 - werden in einer Steuerungseinrichtung 22 mithilfe der darin enthaltenen Elektronik und Softwarealgorithmen entsprechend aufbereitet. Für eine sicherheitsgerichtete Antriebstechnik werden die Gebersignale 20 zusätzlich ausgewertet, beispielsweise durch redundante Elektronik. Die Gebersignale sind charakterisierend für eine Drehzahl der Antriebseinrichtung, d.h. für eine Drehzahl einer hier nicht dargestellten Motorwelle. Des Weiteren werden auch Signale von dem Gleichrichter 14 und von Stromsensoren 24, 26, 28, die Signale einer ersten, zweiten und dritten Komponente 30, 32, 34 des Dreiphasenwechselstroms entsprechend den drei Phasen (bezeichnet als $i_R$, $i_S$ und $i_T$) bei der Verarbeitung in der Steuerungseinrichtung 22 berücksichtigt. Zur Steuerung des Motors 12 in sicherer Technik werden Ansteuersignale 36 an den Wechselrichter 16 übergeben.

Tritt während des Betriebs ein Fehler auf oder wird ein NotHalt-Schalter betätigt, erfolgt ein Bremsvorgang der Antriebseinrichtung 10. Dieser wird im Optimalfall als generatorischer Bremsvorgang durchgeführt, da dies die schnellstmögliche Stillsetzung der Antriebseinrichtung 10 erlaubt.

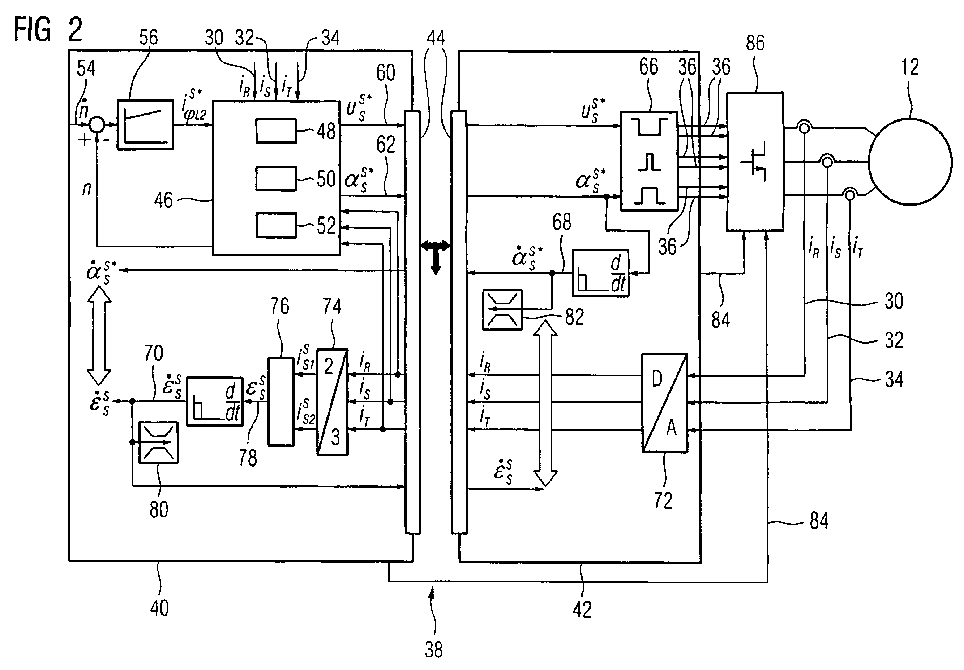

FIG 2 zeigt einen Ausschnitt eines schematisch vereinfachten Aufbaus einer Antriebseinrichtung 10 (FIG 1), die mit einem geberlosen System 38 betrieben wird. Ein solches geberloses System 38 wird gemäß der Erfindung verwendet, wenn es zu einem Fehler im Gebersystem 18 (FIG 1) kommt, z.B. durch einen Defekt der Sensorik, einem Defekt der Stromversorgung der Geber, Kurzschlüsse oder Aderbrüche in den Geberleitungen, Kontaktprobleme bei der Verbindungstechnik zu/von den Gebern, bei zu hohe Drehzahlen, die eine Grenzfrequenz des Gebersystems 18 überschreiten etc. Eine Umschaltung auf das geberlose System 38 erfolgt, um einen generatorischen Bremsvorgang anstelle eines "sicheren Halts" durchzuführen.

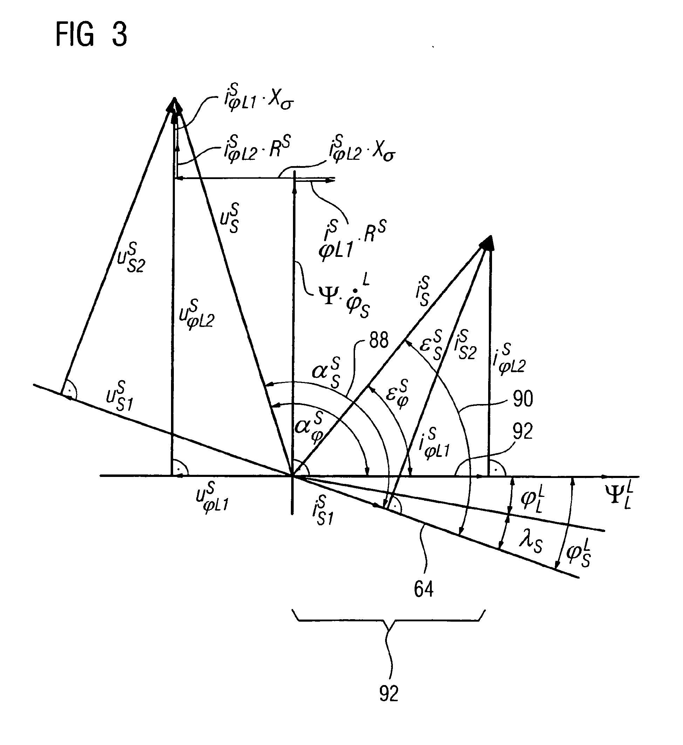

Mit einem solchen geberlosen System 38 ist außerdem eine redundante Beobachtung eines generatorischen Bremsvorgangs möglich, wie sie im Folgenden näher erläutert wird. Das geberlose System 38 umfasst eine erste und eine zweite Steuerungseinheit 40, 42, die über eine Kommunikationsschnittstelle 44 miteinander in Verbindung stehen. Die Stromsensoren 24, 26, 28 dienen wie in FIG 1 der Erfassung der ersten, zweiten und dritten Komponente 30, 32, 34 des den Motor 12 speisenden Dreiphasenwechselstroms. Die erste, zweite und dritte Komponente 30, 32, 34 des Dreiphasenwechselstroms werden einer von der ersten Steuerungseinheit 40 umfassten Regelungseinheit 46 zugeführt. Diese umfasst ein Motormodell 48, einen Stromregler 50 und eine Drehzahlberechnung 52. Auf Basis einer Drehzahlsollwertschnittstelle 54, die einem Drehzahlregler 56 zugeführt wird, wird eine weitere, nämlich eine ein Drehmoment bildende Stromkomponente 58 erzeugt und der Regelungseinheit 46 zugeführt. Über den Drehzahlregler 56, das Motormodell 48, den Stromregler 50 und die Drehzahlberechnung 52 ergeben sich zwei Sollgrößen, ein Spannungssollwert 60, der einem Betrag einer Spannung eines von der Antriebseinrichtung 10 umfassten Stators (nicht dargestellt) entspricht, und ein Sollwinkel 62, welcher dem Spannungssollwert 60 bezogen auf eine Statorachse 64 (nicht dargestellt) in Polarkoordinaten entspricht. Eine diesbezügliche Darstellung wird weiter unten in FIG 3 näher erläutert.

Über die Kommunikationsschnittstelle 44 werden der Spannungssollwert 60 und der Sollwinkel 62 an die zweite Steuerungseinheit 42 übertragen und einem z.B. als Steuersatz 66 ausgeführten Schaltelement zugeführt. In diesem werden Ansteuersignale 36 erzeugt und dem Wechselrichter 86 zur Ansteuerung des Motors 12 zugeführt. Außerdem erfolgt in der zweiten Steuerungseinheit 42 eine zeitliche Differentiation des Sollwinkels 62, woraus sich ein erster Frequenzwert 68 der Statorspannung ergibt.

Zur Berechnung eines zweiten Frequenzwerts 70 werden die erste, zweite und dritte Komponente 30, 32, 34 des Dreiphasenwechselstroms in einem von der zweiten Steuerungseinheit 42 umfassten A/D-Wandler 72 digitalisiert und über die Kommunikationsschnittstelle 44 der ersten Steuerungseinheit 40 zugeführt. Darin wird aus der ersten, zweiten und dritten Komponente 30, 32, 34 in einer ersten und einer zweiten Verarbeitungseinheit 74, 76 ein Winkel 78 berechnet, der eine Frequenz des am Stator gemessenen Stroms bezogen auf die Statorachse 64 (nicht dargestellt) in Polarkoordinaten (s.o.) charakterisiert. Dieser Winkel 78 wird dann in der ersten Steuerungseinheit 40 zeitlich differenziert und ergibt den zweiten Frequenzwert 70.

Die Drehzahl der Antriebseinrichtung 10 (FIG 1), d.h. der Motorwelle, entspricht dem ersten Frequenzwert 68 bis auf eine Abweichung um den Wert einer Schlupffrequenz, die zumeist jedoch nur etwa ein Prozent von einer Nenndrehzahl abweicht. Der zweite Frequenzwert 70 gibt ebenfalls Aufschluss auf die aktuelle Drehzahl der Motorwelle.

Die erste Steuerungseinheit 40 umfasst des Weiteren eine erste Überwachungseinheit 80 und die zweite Steuerungseinheit umfasst eine zweite Überwachungseinheit 82. Der ersten Überwachungseinheit 80 wird der zweite Frequenzwert 70 zugeführt und auf Überschreiten eines vorgegebenen ersten Grenzwerts überwacht, während der zweiten Überwachungseinheit 82 der erste Frequenzwert 68 zugeführt wird und auf Überschreiten eines zweiten vorgegebenen Grenzwerts überwacht wird. Bei Überschreiten mindestens eines der Grenzwerte erfolgt ein Stillsetzen der Antriebseinrichtung 10 (FIG 1). Außerdem werden zur weiteren Fehleraufdeckung der erste und zweite Frequenzwert 68, 70 sowohl in der ersten Steuerungseinheit 40 als auch in der zweiten Steuerungseinheit 42 laufend miteinander verglichen. Weichen die Frequenzwerte 68, 70 um mehr als einen vorgegebenen Wert voneinander ab, erfolgt wiederum eine Stillsetzung der Antriebseinrichtung 10. Als zusätzliche Sicherheitsüberprüfung kann in beiden Steuerungseinheiten 40, 42 eine sogenannte Plausibilitätsprüfung durchgeführt werden, bei der die Summe der drei Komponenten 30, 32, 34 des Dreiphasenwechselstroms überprüft wird, die immer gleich Null sein muss.

Die Stillsetzung der Antriebseinrichtung (FIG 1) erfolgt dabei durch ein Impulslöschungssignal 84. Dieses kann von einer oder jeder Steuerungseinheit 40, 42 ausgesendet werden und verursacht eine Sperrung der Weiterleitung von Ansteuersignalen 36, die auf Basis des Spannungssollwerts 60 und des Sollwinkels 62 vom Steuersatz 66 erzeugt werden, zu einem Wechselrichter 86, so dass keine Strom- oder Spannungssignale an den Motor 12 weitergegeben werden. Die Energiezufuhr zum Motor 12 ist somit abgetrennt.

FIG 3 zeigt ein Zeigerdiagramm einer Asynchronmaschine. Das Zeigerdiagramm stellt den Spannungs- und Stromwert des Dreiphasenwechselstroms in Polarkoordinaten dar. Dabei werden die aus den Komponenten des Dreiphasenwechselstroms ermittelten Spannungs- und Stromwerte des Stators - Statorspannung und Statorstrom - bezogen auf die Statorachse 64 als Winkel dargestellt, z.B. ein sich aus der Spannung ergebender Spannungswinkel 88 und ein sich aus dem Strom ergebender Stromwinkel 90. Bei Asynchronmaschinen ist dies kein Problem, da auch im Leerlauf ein Magnetisierungsstrom 92 ( $i_{\alpha L1}^{S}$ ) fließt.

Bei permanenten Synchronmaschinen ist dagegen kein Magnetisierungsstrom erforderlich. Ein magnetischer Fluss in der Maschine wird über die in einem Rotor oder Stator angeordneten Permanentmagnete erzeugt. Der Statorstrom ist also im Leerlauf gleich Null. Eine Frequenzerfassung über die Statorströme ist nicht möglich. Für Produktionsmaschinen, wie z.B. bei Textilmaschinen, ist ein bestimmter Gleichlauf von Motoren untereinander erforderlich. Dieser Gleichlauf kann entweder durch den Einsatz von Motoren mit Gebersystem 18 (FIG 1) in Verbindung mit einer Gleichlaufregelung oder durch den Einsatz von Synchronmaschinen ohne Gebersystem 18, also mithilfe eines geberlosen Systems, erzielt werden. Zur Realisierung der sicherheitsgerichteten Technik bei Synchronmaschinen gemäß der Erfindung wird abhängig von einer Belastung der Maschine ein bestimmter für die Frequenzerfassung ausreichender Magnetisierungsstrom eingeprägt.

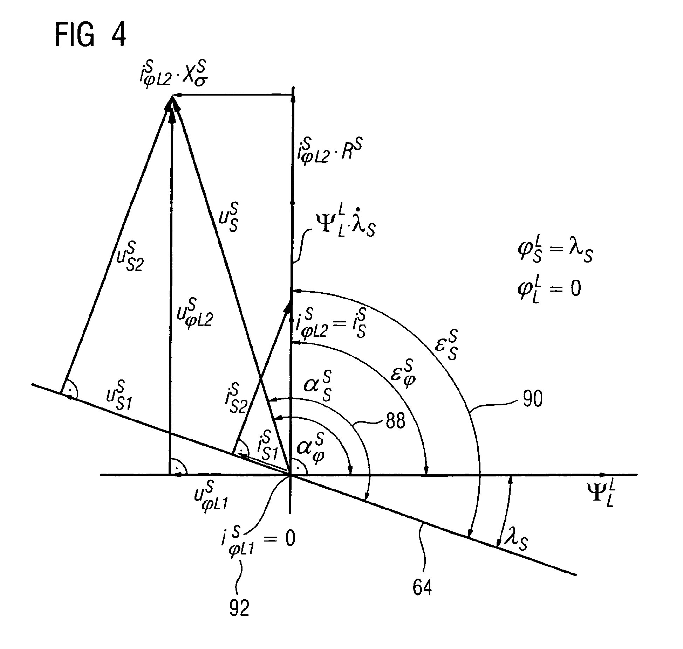

In FIG 4 ist ein Zeigerdiagramm einer Synchronmaschine dargestellt, wobei der Magnetisierungsstrom 92 gleich Null ist.

Damit lässt sich die Erfindung kurz wie folgt darstellen: Es wird ein Verfahren zum Betrieb einer Antriebseinrichtung 10 und eine nach dem Verfahren arbeitende Antriebseinrichtung 10 angegeben, wobei bei Auftreten eines Fehlers in einem von der Antriebseinrichtung 10 umfassten Gebersystem 18 ein Bremsvorgang durchgeführt wird, bei dem vorgesehen ist, dass bei Auftreten eines Fehlers eine Umschaltung auf eine von der Antriebseinrichtung 10 umfasstes geberloses System 38 erfolgt und über das geberlose System 38 als Bremsvorgang ein generatorischer Bremsvorgang durchgeführt wird.

**Patentansprüche**

1. Verfahren zum Betrieb einer Antriebseinrichtung (10), wobei bei Auftreten eines Fehlers in einem von der Antriebseinrichtung (10) umfassten Gebersystem (18) eine Umschaltung vom Gebersystem (18) auf ein von der Antriebseinrichtung (10) umfasstes geberloses System (38) erfolgt,
**dadurch gekennzeichnet,**
**dass** über das geberlose System (18) ein Bremsvorgang generatorisch durchgeführt und redundant beobachtet wird,
**dass** ein Sollwert für eine Spannung eines von der Antriebseinrichtung (10) umfassten Stators - Spannungssollwert (60) - als Sollwinkel (62) in Bezug auf eine Statorachse (64) ausgegeben wird,
**dass** aus einer ersten, zweiten und dritten Komponente (30, 32,34) eines Dreiphasenwechselstroms, der in einen von der Antriebseinrichtung (10) umfassten Motor (12) eingespeist wird, ein eine Frequenz eines am Stator gemessenen Stroms charakterisierender Winkel (78) in Bezug auf die Statorachse (64) berechnet wird,
**dass** durch zeitliche Differentiation des Sollwinkels (62) und des Winkels (78) ein erster und zweiter Frequenzwert (68,70) des Stators zur Bestimmung einer Drehzahl der Antriebseinrichtung (10) berechnet werden,
**dass** überwacht wird, ob der erste bzw. zweite Frequenzwert (68,70) unterhalb eines vorgegebenen ersten bzw. zweiten Grenzwerts verbleibt und
**dass** bei Überschreiten mindestens eines der Grenzwerte eine Stillsetzung der Antriebseinrichtung (10) erfolgt.

2. Verfahren zum Betrieb einer Antriebseinrichtung (10) oder Verfahren nach Anspruch 1, wobei zur redundanten Beobachtung der Antriebseinrichtung (10) bzw. des generatorischen Bremsvorgangs einer Regelungseinheit (46) in einer ersten vom geberlosen System (38) umfassten Steuerungseinheit (40) die erste, zweite und dritte Komponente (30,32,34) des Dreiphasenwechselstroms zur Verarbeitung zugeführt werden und wobei der Sollwinkel (62) an eine zweite vom geberlosen System (38) umfasste Steuerungseinheit (42) übergeben wird.

**3.** Verfahren nach Anspruch 2, wobei der Winkel (78) in der ersten Steuerungseinheit (40) aus der ersten, zweiten und dritten Komponente (30,32,34) des Dreiphasenwechselstroms-berechnet wird.

**4.** Verfahren nach einem der vorangehenden Ansprüche, wobei der erste und/oder zweite Frequenzwert (68,70) einer von der zweiten bzw. ersten Steuerungseinheit (40,42) umfassten zweiten bzw. ersten Überwachungseinheit (80,82) zugeführt wird und wobei in der zweiten bzw. ersten Überwachungseinheit (80,82) überwacht wird, ob der erste bzw. zweite Frequenzwert (68,70) unterhalb des vorgegebenen ersten bzw. zweiten Grenzwerts verbleibt.

**5.** Verfahren nach einem der vorangehenden Ansprüche" wobei bei Abweichung des ersten Frequenzwerts (68) von dem zweiten Frequenzwert (70) um einen vorgegebenen Wert eine Stillsetzung der Antriebseinrichtung (10) erfolgt.

**6.** Verfahren nach einem der Ansprüche 2 bis 5, wobei eine Summe der ersten, zweiten und dritten Komponente (30,32,34) des Dreiphasenwechselstroms auf eine Nullsumme überprüft wird.

**7.** Verfahren nach Anspruch 4 oder 5, wobei zur Stillsetzung der Antriebseinrichtung (10) eine Weiterleitung von Ansteuersignalen (36), welche in einem von der zweiten Steuerungseinheit (42) umfassten Steuersatz (66) aus dem Spannungssollwert (60) und dem Sollwinkel (62) erzeugt werden, an einen vom geberlosen System (38) umfassten Wechselrichter (86) gesperrt wird.

**8.** Verfahren nach einem der vorangehenden Ansprüche, wobei ein Gradient der Drehzahl beobachtet wird.

**9.** Antriebseinrichtung (10) mit einem Gebersystem (18) und einem geberlosen System (38) sowie Mitteln zur Umschaltung vom Gebersystem (18) auf das geberlose System (38) bei Auftreten eines Fehlers in dem Gebersystem (18),
**gekennzeichnet durch**
Mittel zur Durchführung eines generatorischen Bremsvorgangs und Mittel zur redundanten Beobachtung des generatorischen Bremsvorgangs,
wobei das geberlose System (18) als Mittel zur redundanten Beobachtung des generatorischen Bremsvorgangs eine erste und eine zweite Steuerungseinheit (40,42) umfasst und wobei die erste Steuerungseinheit (40) eine Regelungseinheit (46) mit einem Mittel zur Verarbeitung einer ersten, zweiten und dritten Komponente (30,32,34) eines im Motor (12) der Antriebseinrichtung (10) erzeugbaren Dreiphasenwechselstroms umfasst, wobei ein in der Regelungseinheit (46) berechneter Sollwert für eine Spannung eines von der Antriebseinrichtung (10) umfassten Stators - Spannungssollwert (60) - als Sollwinkel (62) in Bezug auf eine Statorachse (64) zur Übergabe an die zweite Steuerungseinheit (42) vorgesehen ist
wobei die erste Steuerungseinheit (40) Mittel zur Berechnung eines Winkels (78) aufweist, welcher eine Frequenz eines Stroms, der am Stator gemessen wird, in Bezug auf die Statorachse (64) charakterisiert,
wobei die erste und zweite Steuerungseinheit (40,42) Mittel zur Berechnung eines ersten bzw. zweiten Frequenzwerts (68,70) des Stators aus dem Sollwinkel (62) und/oder dem Winkel (78) aufweisen, wobei die erste und zweite Steuerungseinheit (40,42) eine erste bzw. zweite Überwachungseinheit (80,82) zur Überwachung des zweiten bzw. ersten Frequenzwerts (68,70) auf Überschreitung eines vorgegebenen ersten bzw. zweiten Grenzwerts umfasst.

**10.** Antriebseinrichtung nach Anspruch 9, mit Mitteln zur Beobachtung eines Gradienten einer Drehzahl der Antriebseinrichtung (10).

**11.** Computerprogramm mit durch einen Computer ausführbaren Programmcodeanweisungen zur Implementierung des Verfahrens nach einem der Ansprüche 1 bis 8, wenn das Computerprogramm auf einem Computer ausgeführt wird.

**12.** Speichermedium mit einem durch einen Computer ausführbaren Computerprogramm gemäß Anspruch 11.

**13.** Antriebseinrichtung (10) nach einem der Ansprüche 9 oder 10, auf der ein Computerprogramm nach Anspruch 11 geladen ist.

**14.** Antriebseinrichtung (10) nach Anspruch 13, mit einer Verarbeitungseinheit als Mittel zur Umschaltung vom Gebersystem (18) auf das geberlose System (38) bei Auftreten eines Fehlers im Gebersystem (18) und als Mittel zur Durchführung eines generatorischen Bremsvorgangs als Bremsvorgang.

**Claims**

**1.** Method for operating a drive assembly (10),
wherein upon the occurrence of an error in an encoder system (18) contained in the drive assembly (10) a switch from the encoder system (18) to an encoderless system (38) contained in the drive assembly (10) results,

**characterised in that**

a braking operation is performed in a generative manner via the encoderless system (18) and is observed redundantly,

a setpoint value for a voltage of a stator contained in the drive assembly (10), voltage setpoint value (60), is output as a setpoint angle (62) in relation to a stator axis (64),

from a first, second and third component (30,32,34) of a three-phase alternating current which is fed into a motor (12) contained in the drive assembly (10), an angle (48) characterising a frequency of a current measured in the stator is calculated in relation to the stator axis (64),

a first and second frequency value (68,70) of the stator are calculated by the time differentiation of the setpoint angle (62) and of the angle (78) in order to determine a speed of the drive assembly (10),

it is observed whether the first or second frequency value (68,70) remains below a predetermined first or second threshold value and a shutdown of the drive assembly (10) results if at least one of the threshold values is exceeded.

2. Method for operating a drive assembly (10) or method according to claim 1, wherein for the redundant observation of the drive assembly (10) or the generative braking operation of a regulating unit (46) in a first control unit (40) contained in the encoderless system (38) the first, second and third components (30,32,34) of the three-phase alternating current can be supplied for processing and wherein the setpoint angle (62) is transmitted to a second control unit (42) contained in the encoderless system (38).

3. Method according to claim 2, wherein the angle (78) in the first control unit (40) is calculated from the first, second and third components (30,32,34) of the three-phase alternating current.

4. Method according to one of the preceding claims, wherein the first and/or second frequency value (68,70) is supplied to a second or first monitoring unit (80,82) contained in the second or first control unit (40,42) and wherein a check is carried out in the second or first monitoring unit (80,82) to determine whether the first or second frequency value (68,70) remains below the predetermined first or second threshold value.

5. Method according to one of the preceding claims, wherein a deviation of the first frequency value (68) from the second frequency value (70) by a predetermined value results in a shutdown of the drive assembly (10).

6. Method according to one of claims 2 to 5, wherein a sum of the first, second and third components (30,32,34) of the three-phase alternating current is checked against a zero-sum.

7. Method according to claim 4 or 5, wherein for the purpose of shutting down the drive assembly (10), a transfer of control signals (36) which are generated in a control logic (66) contained in the second control unit (42) from the voltage setpoint value (60) and the setpoint angle (62) are stopped at an inverter (86) contained in the encoderless system (38).

8. Method according to one of the preceding claims, wherein a gradient of the speed is observed.

9. Drive assembly (10) having an encoder system (18) and an encoderless system (38) and means for switching from the encoder system (18) to the encoderless system (38) upon the occurrence of an error in the encoder system (18),

**characterised by**

means for carrying out a generative braking operation and means for the redundant observation of the generative braking operation, wherein the encoderless system (18) contains a first and a second control unit (40,42) as a means for the redundant observation of the generative braking operation and wherein the first control unit (40) contains a regulating unit (46) having a means for processing a first, second and third component (30,32,34) of a three-phase alternating current able to be generated in the motor (12) of the drive assembly (10),

wherein a setpoint value for a voltage of a stator contained in the drive assembly (10), voltage setpoint value (60), calculated in the regulating unit (46) is provided as a setpoint angle (62) in relation to a stator axis (64) for transmitting to the second control unit (42)

wherein the first control unit (40) has means for calculating an angle (78) which characterises a frequency of a voltage measured at the stator in relation to the stator axis (64),

wherein the first and second control units (40,42) has means for calculating a first or second frequency value (68, 70) of the stator from the setpoint value (62) and/or the angle (78), wherein the first and second control unit (40, 42) include a first or second monitoring unit (80,82) for monitoring the second or first frequency value (68,70) exceeding a predetermined first or second threshold value.

10. Drive assembly according to claim 9 having means for observing a gradient of a speed of the drive assembly (10).

11. Computer program having program code commands able to be executed by a computer for implementation of the method according to one of claims 1 to 8, if the computer program is executed on a computer.

**12.** Storage medium having a computer program according to claim 11 which is able to be executed by a computer.

**13.** Drive assembly (10) according to one of claims 9 or 10 onto which a computer program according to claim 11 is loaded.

**14.** Drive assembly (10) according to claim 13 having a processor as a means for switching from the encoder system (18) to the encoderless system (38) upon the occurrence of an error in the encoder system (18) and as a means for carrying out a generative braking operation as a braking operation.

**Revendications**

**1.** Procédé pour faire fonctionner un dispositif ( 10 ) d'entraînement, dans lequel, lorsqu'il apparaît un défaut dans un système ( 18 ) à transmetteur compris par le dispositif ( 10 ) d'entraînement, une commutation du système ( 18 ) à transmetteur a un système ( 38 ) sans transmetteur compris par le dispositif ( 10 ) d'entraînement a lieu,
**caractérisé**
**en ce que** l'on effectue par le système ( 18 ) sans transmetteur une opération de freinage en génératrice et on l'observe de manière redondante,
**en ce que** l'on émet une valeur de consigne pour une tension d'un stator compris par le dispositif ( 10 ) d'entraînement - valeur ( 60 ) de consigne de tension - comme angle ( 62 ) de consigne rapporté à un axe du stator,
**en ce qu'**on calcule à partir d'une première, d'une deuxième et d'une troisième composantes ( 30, 32, 34 ) d'un courant alternatif triphasé, qui est injecté dans un moteur ( 12 ) compris par le dispositif ( 10 ) d'entraînement, un angle ( 78 ), par rapport à l'axe ( 64 ) du stator, caractérisant une fréquence d'un courant mesuré au stator,
**en ce que**, par différenciation temporelle de l'angle ( 62 ) de consigne et de l'angle ( 78 ), on calcule une première et une deuxième valeurs ( 68, 70 ) de fréquence du stator pour la détermination d'une vitesse de rotation du dispositif ( 10 ) d'entraînement,
**en ce que** l'on contrôle si la première et respectivement la deuxième valeur ( 68, 70 ) de fréquence reste en dessous d'une première et respectivement d'une deuxième valeur limite prescrite, et
**en ce que**, si au moins l'une des valeurs limites est dépassée, on effectue une mise à l'arrêt du dispositif ( 10 ) d'entraînement.

**2.** Procédé pour faire fonctionner un dispositif ( 10 ) d'entraînement ou procédé suivant la revendication 1, dans lequel, pour l'observation redondante du dispositif ( 10 ) d'entraînement ou de l'opération de freinage en génératrice, on envoie pour traitement à une unité ( 46 ) de régulation d'une première unité ( 40 ) de commande comprise par le système ( 38 ) sans transmetteur, la première, la deuxième et la troisième composantes ( 30, 32, 34 ) du courant alternatif triphasé et dans lequel on transfère la valeur ( 62 ) de consigne à une deuxième unité ( 42 ) de commande comprise par le système ( 38 ) sans transmetteur.

**3.** Procédé suivant la revendication 2, dans lequel on calcule l'angle ( 78 ) dans la première unité ( 40 ) de commande à partir de la première, de la deuxième et de la troisième composantes ( 30, 32, 34 ) du courant alternatif triphasé.

**4.** Procédé suivant l'une des revendications précédentes, dans lequel on envoie la première et/ou la deuxième valeur ( 68, 70 ) de fréquence à une deuxième ou respectivement à une première unité ( 80, 82 ) de contrôle comprise par la deuxième ou respectivement par la première unité ( 40, 42 ) de commande et dans lequel on contrôle dans la deuxième ou respectivement dans la première unité ( 80, 82 ) de contrôle si la première ou respectivement la deuxième valeur ( 68, 70 ) de fréquence reste en dessous de la première ou respectivement de la deuxième valeur limite prescrite.

**5.** Procédé suivant l'une des revendications précédentes, dans lequel, si la première valeur ( 68 ) de fréquence s'écarte de la deuxième valeur ( 70 ) de fréquence d'une valeur prescrite on effectue une mise à l'arrêt du dispositif ( 10 ) d'entraînement.

**6.** Procédé suivant l'une des revendications 2 à 5, dans lequel on contrôle que la somme de la première, de la deuxième et de la troisième composantes ( 30, 32, 34 ) du courant alternatif triphasé est nulle.

**7.** Procédé suivant la revendication 4 ou 5, dans lequel, pour la mise à l'arrêt du dispositif ( 10 ) d'entraînement, on bloque un acheminement de signaux ( 36 ) de commande, qui sont produits dans un ensemble ( 66 ) de commande compris par la deuxième unité ( 42 ) de commande à partir de la valeur ( 60 ) de consigne de tension et de l'angle ( 62 ) de consigne, sur un onduleur ( 86 ) compris par le système ( 38 ) sans transmetteur.

**8.** Procédé suivant l'une des revendications précédentes, dans lequel on observe un gradient de la vitesse de rotation.

**9.** Dispositif ( 10 ) d'entraînement comprenant un système ( 18 ) à transmetteur et un système ( 38 ) sans transmetteur, ainsi que des moyens pour passer du système ( 38 ) de transmetteur au système ( 38 ) sans transmetteur, lors de l'apparition d'un défaut dans le système ( 18 ) à transmetteur,
**caractérisé par**
un moyen pour effectuer une opération de freinage en génératrice et un moyen d'observation redondant de l'opération de freinage en génératrice,
dans lequel le système ( 18 ) sans transmetteur comprend, comme moyen d'observation redondant de l'opération de freinage en génératrice, une première et une deuxième unités ( 40, 42 ) de commande et dans lequel la première unité ( 40 ) de commande comprend une unité ( 46 ) de régulation ayant un moyen de traitement d'une première, d'une deuxième et d'une troisième composantes ( 30, 32, 34 ) d'un courant alternatif triphasé pouvant être produit dans le moteur ( 12 ) du dispositif ( 10 ) d'entraînement, dans lequel une valeur de consigne, calculée dans l'unité ( 46 ) de régulation, d'une tension d'un stator compris par le dispositif ( 10 ) d'entraînement - valeur ( 60 ) de consigne de tension - est prévue comme angle ( 62 ) de consigne, rapporté à un axe ( 64 ) de stator, en vue d'être transmise à la deuxième unité ( 42 ) de commande,
dans lequel la première unité ( 40 ) de commande comporte des moyens de calcul d'un angle ( 78 ), qui caractérise une fréquence d'un courant mesuré au stator, par rapport à l'axe ( 64 ) du stator,
dans lequel la première et la deuxième unités ( 40, 42 ) de commande ont des moyens de calcul d'une première ou respectivement d'une deuxième valeur ( 68, 70 ) de fréquence du stator à partir de l'angle ( 62 ) de consigne et/ou de l'angle ( 78 ) ,
dans lequel la première et la deuxième unités ( 40, 42 ) de commande comprennent une première et respectivement une deuxième unité ( 80, 82 ) de contrôle pour contrôler que la deuxième et respectivement la première valeur ( 68, 70 ) de fréquence dépasse une première ou respectivement une deuxième valeur limite prescrite.

10. Dispositif d'entraînement suivant la revendication 9, comprenant des moyens d'observation d'un gradient d'une vitesse de rotation du dispositif ( 10 ) d'entraînement.

11. Programme informatique ayant des instructions de code de programme pouvant être exécutées sur un ordinateur pour la mise en oeuvre du procédé suivant l'une des revendications 1 à 8, lorsque le programme informatique est réalisé sur un ordinateur.

12. Support de mémoire ayant un programme informatique pouvant être réalisé par un ordinateur suivant la revendication 11.

13. Dispositif ( 10 ) d'entraînement suivant l'une des revendications 9 ou 10, sur lequel un programme informatique suivant la revendication 11 est chargé.

14. Dispositif ( 10 ) d'entraînement suivant la revendication 13, comprenant une unité de traitement comme moyen de passage du système ( 18 ) à transmetteur au système ( 18 ) sans transmetteur lors de l'apparition d'un défaut dans le système ( 18 ) à transmetteur et comme moyen pour effectuer une opération de freinage en génératrice comme opération de freinage.

FIG 1

FIG 2

EP 2 146 426 B1

# FIG 3

FIG 4

$i^S_{\varphi L2} \cdot X^S_\sigma$

$u^S_{S2}$

$u^S_S$

$i^S_{\varphi L2} \cdot R^S$

$u^S_{\varphi L2}$

$\Psi^L_L \cdot \dot\lambda_S$

$\varphi^L_S = \lambda_S$

$\varphi^L_L = 0$

$u^S_{S1}$

$i^S_{S2}$

$i^S_{\varphi L2} = i^S_S$

$\varepsilon^S_S$

$\alpha^S_S$

$\varepsilon^S_\varphi$

90

$i^S_{S1}$

88

$u^S_{\varphi L1}$

$\alpha^S_\varphi$

$\Psi^L_L$

$i^S_{\varphi L1} = 0$

$\lambda_S$

92

64

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080035411 A1
- JP 2005297749 A